# EUROPÄISCHE PATENTSCHRIFT

(11) **EP 2 868 231 B1**
(45) Veröffentlichungstag und Bekanntmachung des Hinweises auf die Patenterteilung: **16.03.2016**
(21) Anmeldenummer: 14190906.9
(22) Anmeldetag: 29.10.2014
(51) Int. Cl.: A47C 7/00, F16B 12/08

(54) **Metallbein für einen Sessel oder Tisch**
Metal leg for an armchair or table
Pied métallique pour un fauteuil ou une table

(30) Priorität: 30.10.2013 AT 507092013
(43) Veröffentlichungstag der Anmeldung: 06.05.2015
(73) Patentinhaber: Mayr Schulmöbel GmbH, 4644 Scharnstein (AT)
(72) Erfinder: Kronberger, Günter, 4553 Schlierbach (AT)
(74) Vertreter: Patentanwaltskanzlei Hübscher

(56) Entgegenhaltungen:
- BE-A- 707 683
- DE-A1- 19 935 213
- DE-B- 1 151 638
- GB-A- 772 337

## Beschreibung

Die Erfindung bezieht sich auf ein Metallbein für einen Sessel oder Tisch mit einem hohlen Bein und einem hohlen Fußschenkel, der mit dem Beinschenkel über eine Gehrung verschweißt ist.

Für Tische oder Stühle sind Metallbeine bekannt, die einen am Boden aufliegenden Fußschenkel und einen von diesem aufragenden Beinschenkel aufweisen, wobei Fuß- und Beinschenkel in einem rechten Winkel zueinander stehen und über eine Gehrung miteinander verbunden, insbesondere verschweißt sind. Diese Verbindungsart hat den Vorteil, dass die Stoßfuge zwischen den beiden Schenkeln auf eine Kante fällt und somit weniger in Erscheinung tritt. Nachteilig ist, dass die Schweißnaht der Gehrungsfuge größeren Querbelastungen des Beinschenkels nicht standhält, was insbesondere dann problematisch ist, wenn der Fußschenkel und der Beinschenkel gemeinsam keinen rechten, sondern beispielsweise einen spitzen Winkel miteinander einschließen, womit die Gestaltungsfreiheit für derartige Metallbeine einschränkt.

Zur Verbindung eines Beinschenkels mit einem Fußschenkel ist es bekannt (DE 1151638 B), den Fußschenkel im Bereich einer Anschweißstelle in Richtung der gewünschten Winkellage des anzuschweißenden Beinschenkels mit einander diametral gegenüberliegende Schlitzen auszustatten, die einem flachgedrückten Zungenfortsatz eines in den Beinschenkel eingetriebenen Rohrstückes angepasst sind und von diesem durchsetzt werden, wenn der Beinschenkel mit seinem entsprechend der Außenfläche des Fußschenkels beschnittenen Rand an den Fußschenkel angesetzt wird. Der biegesteife Zugenfortsatz des in den Beinschenkel eingetriebenen Rohres dient dabei dazu, die Biegebeanspruchungen in den Schlitzen auf die Wand des Fußschenkels zu übertragen.

Der Erfindung liegt somit die Aufgabe zugrunde, ein Metallbein der eingangs geschilderten Art so auszugestalten, dass eine höhere Stabilität bei Querbelastungen des Beinschenkels ermöglicht wird, ohne auf die gestalterischen Vorzüge eine Gehrungsverbindung verzichten zu müssen.

Die Erfindung löst die gestellte Aufgabe dadurch, dass die Wand des Beinschenkels im Bereich des einen rechten oder spitzen Winkel bildenden Innenecks zwischen Bein- und Fußschenkel einen über die Gehrung verlängerten Wandabschnitt aufweist, der sich an der gegenüberliegenden Wand des Fußschenkels abstützt.

Zufolge dieser Maßnahme wird eine Belastung des Beinschenkels nicht nur über die Schweißnaht der Gehrungsfuge, sondern insbesondere auch durch den über die Gehrung verlängerten Wandabschnitt auf den Fußschenkel abgetragen, was insbesondere bei einer Querbelastung des Beinschenkels in Richtung des Fußschenkels zu einer Entlastung der Gehrungsverbindung und somit zu einer höheren Belastbarkeit der Verbindung zwischen den beiden Schenkeln führt. Zu diesem Zweck muss der Fußschenkel im Bereich der Gehrung lediglich eine umfangseitige Ausnehmung für den verlängerten Wandabschnitt aufweisen, sodass der verlängerte Wandabschnitt die Gehrungsverbindung der beiden Schenkel nicht behindert. In Abhängigkeit der Konstruktion des Sessels oder Tisches treten Querkräfte am Beinschenkel sowohl dann auf, wenn das Inneneck zwischen Bein- und Fußschenkel einen rechten Winkel bildet, als auch, wenn das Inneneck einen spitzen Winkel bildet, wobei sich das erfindungsgemäße Metallbein insbesondere im letzteren Fall für das Abtragen der in diesem Fall erhöhten Querkräfte auf den Beinschenkel vorteilhaft eignet. Sowohl die umfangseitige Ausnehmung des Fußschenkels als auch der in diese Ausnehmung eingreifende verlängerte Wandabschnitt des Beinschenkels können aus einem hohlen Metallrohr ausgeschnitten bzw. ausgefräst werden. Weil der verlängerte Wandabschnitt innerhalb des hohlen Fußschenkels verläuft und sich auf dessen Innenseite abstützt, ist die erfindungsgemäße Verbindung der beiden Schenkel von außen nicht von einer herkömmlichen Gehrungsverbindung zu unterscheiden.

Um den verlängerten Wandabschnitt bei einer Querbelastung des Beinschenkels zusätzlich gegen ein Verschwenken zu sichern, kann der Fußschenkel einen mit der dem Außeneck zugekehrten Seite des verlängerten Wandabschnitts des Beinschenkels zusammenwirkenden Stützanschlag aufweisen. Der verlängerte Wandabschnitt bildet nämlich gemeinsam mit dem Beinschenkel einen an der im Bereich des Innenecks liegenden Umfangswand des Fußschenkels gelagerten Hebel, sodass eine Querbelastung des Beinschenkels auch eine Belastung des verlängerten Wandabschnittes in Längsrichtung des Fußschenkels bedingt, die durch einen Stützanschlag vorteilhaft abgetragen werden kann.

Besonders vorteilhafte Konstruktionsbedingungen ergeben sich in diesem Zusammenhang, wenn der Fußschenkel eine den Stützanschlag bildende Steckaufnahme für den verlängerten Wandabschnitt aufweist. Eine solche Steckaufnahme kann entweder im Innenraum des Fußschenkels vorgesehen oder aber eine auf der dem Inneneck gegenüberliegenden Umfangswand des Fußschenkels vorgesehene Ausnehmung sein. Letztere Ausführungsform bringt den Vorteil mit sich, dass die Steckverbindung zwischen dem verlängerten Wandabschnitt und dem Fußschenkel zusätzlich verschweißt werden kann.

Obwohl sowohl Bein- als auch Fußschenkel unterschiedliche Querschnittsformen aufweisen können, solange diese eine Gehrungsverbindung zulassen, ergeben sich besonders günstige statische Eigenschaften, wenn sowohl Bein- als auch Fußschenkel einen ovalen Querschnitt aufweisen.

In der Zeichnung ist der Erfindungsgegenstand beispielsweise dargestellt. Es zeigen
- Fig. 1: den Fuß- und Beinschenkel eines erfindungsgemäßen Metallbeins vor deren Verschweißen,
- Fig. 2: das Metallbein der Fig. 1 in zusammengefügtem Zustand und
- Fig. 3: einen Tisch mit dem Metallbein der Fig. 1 und 2 in einem kleineren Maßstab.

Ein erfindungsgemäßes Metallbein für einen Sessel oder Tisch weist einen hohlen Beinschenkel 1 und einen hohlen Fußschenkel 2 auf. Der Beinschenkel 1 ragt vom Fußschenkel 2 auf und ist mit diesem über eine Gehrung 3 so verbunden, dass das Inneneck 4 zwischen Beinschenkel 1 und Fußschenkel 2 einen spitzen Winkel α bildet. Sowohl Beinschenkel 1 als auch Fußschenkel 2 sind aus einem Metallrohr mit ovalem Querschnitt gefertigt. Obwohl grundsätzlich auch andere Verbindungsarten denkbar sind, ergibt sich eine besonders stabile Verbindung, wenn der Beinschenkel 1 und der Fußschenkel 2 an der Gehrung 3 miteinander verschweißt sind.

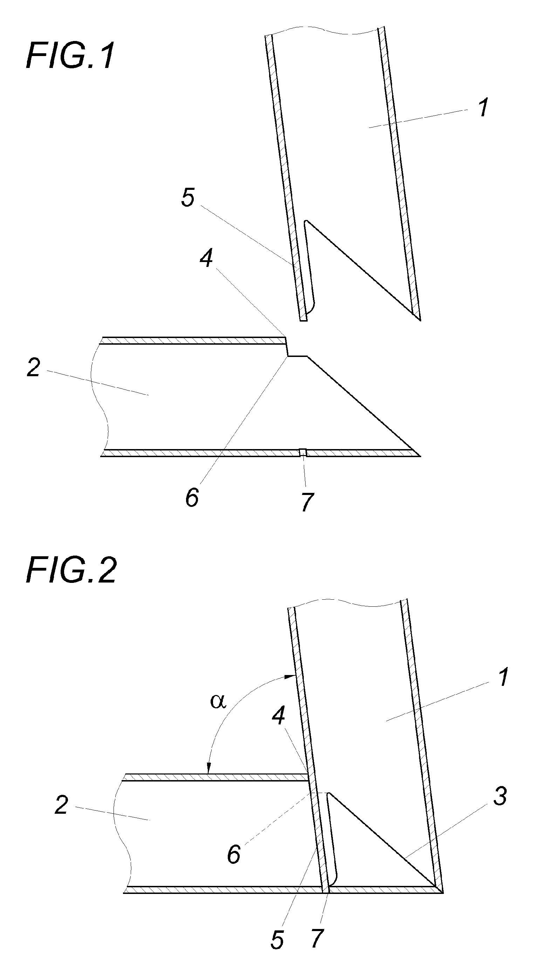

Wie insbesondere der Fig. 1 entnommen werden kann, weist der Beinschenkel 1 einen über die Gehrung 3 verlängerten Wandabschnitt 5 auf, der beispielsweise gemeinsam mit der Gehrung 3 aus dem hohlen Metallrohr des Beinschenkels 1 gefräst oder geschnitten werden kann. Zur Aufnahme des verlängerten Wandabschnitts 5 des Beinschenkels 1 weist der Fußschenkel 2 im Bereich des Innenecks 4 eine Ausnehmung 6 auf, sodass Fuß- und Beinschenkel 1, 2 ungehindert an der Gehrung 3 aneinander gefügt werden können.

Innerhalb des Fußschenkels 2 stütz sich der verlängerte Wandabschnitt 5 auf der dem Inneneck 4 gegenüberliegenden Wand des Fußschenkels 2 ab, beispielsweise in einer, einen Stützanschlag für den verlängerten Wandabschnitt 5 bildenden Steckaufnahme 7, die aus der dem Inneneck 4 gegenüberliegenden Wand des Fußschenkels 2 ausgefräst bzw. ausgeschnitten ist.

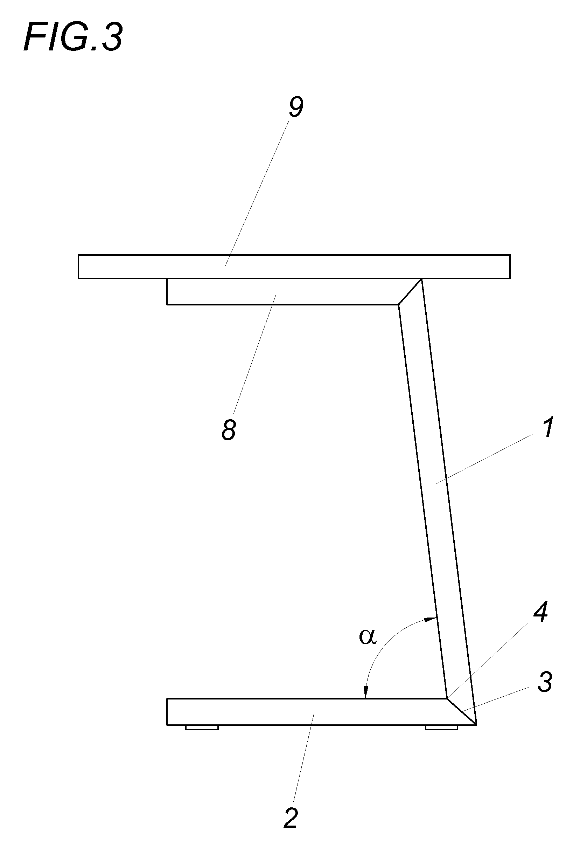

Das erfindungsgemäße Metallbein kann beispielsweise für einen in der Fig. 3 dargestellten Tisch verwendet werden, der zufolge des spitzen Winkels α zwischen Beinschenkel 1 und Fußschenkel 2 einen vergrößerten Fußraum bietet. Bei der Anwendung eines erfindungsgemäßen Metallbeines für einen Tisch trägt der Beinschenkel 1 auf der dem Fußschenkel 2 gegenüberliegenden Seite eine Zarge 8 für eine Tischplatte 9. Die Verbindung zwischen Zarge 8 und Beinschenkel 1 kann dabei ebenfalls der erfindungsgemäßen Verbindung zwischen Beinschenkel 1 und Fußschenkel 2 entsprechen, sodass der Beinschenkel 1 auch auf der dem Fußschenkel 2 gegenüberliegenden Seite einen zweiten, nicht dargestellten und über die Gehrung zwischen Beinschenkel 1 und Zarge 8 verlängerten Wandabschnitt aufweist, der mit einer Steckaufnahme der Zarge 8 zusammenwirkt. Auf diese Weise kann das erfindungsgemäße Metallbein auch die zufolge der Beingeometrie auftretenden Querkräfte auf den Beinschenkel 1 abtragen, ohne dabei Schaden zu nehmen.

## Patentansprüche

1. Metallbein für einen Sessel oder Tisch mit einem hohlen Bein- und einem hohlen Fußschenkel (1, 2), der mit dem Beinschenkel (1) über eine Gehrung (3) verschweißt ist, **dadurch gekennzeichnet, dass** die Wand des Beinschenkels (1) im Bereich des einen rechten oder spitzen Winkel (α) bildenden Innenecks (4) zwischen Bein- und Fußschenkel (1, 2) einen über die Gehrung (3) verlängerten Wandabschnitt (5) aufweist, der sich an der gegenüberliegenden Wand des Fußschenkels (2) abstützt.

2. Metallbein nach Anspruch 1, **dadurch gekennzeichnet, dass** der Fußschenkel (2) einen mit der dem Außeneck zugekehrten Seite des verlängerten Wandabschnitts (5) des Beinschenkels (1) zusammenwirkenden Stützanschlag aufweist.

3. Metallbein nach Anspruch 2, **dadurch gekennzeichnet, dass** der Fußschenkel (2) eine den Stützanschlag bildende Steckaufnahme (7) für den verlängerten Wandabschnitt (5) aufweist.

4. Metallbein nach einem der Ansprüche 1 bis 3, **dadurch gekennzeichnet, dass** die Bein- und Fußschenkel (1, 2) einen ovalen Querschnitt aufweisen.

## Claims

1. Metal leg for an armchair or table having a hollow leg limb and a hollow foot limb (1, 2) which is welded to the leg limb (1) via a mitre joint (3), **characterised in that** the wall of the leg limb (1) comprises, in the region of the inner corner (4) between the leg limb and foot limb (1,2), forming a right-angle or an acute angle (α), a wall section (5) which is extended over the mitre joint (3) and is supported on the opposite wall of the foot limb (2).

2. Metal leg as claimed in claim 1, **characterised in that** the foot limb (2) comprises a support stop co-operating with the side, facing the outer corner, of the extended wall section (5) of the leg limb (1).

3. Metal leg as claimed in claim 2, **characterised in that** the foot limb (2) comprises a plug-in receptacle (7), forming the support stop, for the extended wall section (5).

4. Metal leg as claimed in any one of claims 1 to 3, **characterised in that** the leg limb and foot limb (1,2) have an oval cross-section.

## Revendications

1. Pied métallique pour fauteuil ou table avec un montant creux (1) et une base creuse (2) qui est soudée au montant (1) par l'intermédiaire d'un joint à onglet (3), **caractérisé en ce que** la paroi du montant (1) présente dans la zone du coin intérieur (4) formant un angle droit ou aigu (α) entre le montant (1) et la base (2), une partie de paroi (5) étendue sur le joint à onglet (3), qui repose sur la paroi opposée de la base (2).

2. Pied métallique selon la revendication 1, **caractérisé en ce que** la base (2) présente une butée de soutien concourant avec le côté faisant face à l'angle extérieur de la partie de paroi (5) étendue du montant (1).

3. Pied métallique selon la revendication 2, **caractérisé en ce que** la base (2) présente un logement d'emboîtement (7) formant la butée de soutien pour la partie de paroi (5) étendue.

4. Pied métallique selon l'une des revendications 1 à 3, **caractérisé en ce que** le montant (1) et la base (2) présentent une section transversale ovale.
